(19) **Europäisches Patentamt / European Patent Office / Office européen des brevets**

(11) **EP 3 656 902 A1**

(12) **EUROPEAN PATENT APPLICATION**
published in accordance with Art. 153(4) EPC

(43) Date of publication:
**27.05.2020 Bulletin 2020/22**

(21) Application number: **18836110.9**

(22) Date of filing: **12.07.2018**

(51) Int Cl.:
*D03D 1/02* (2006.01)  *D06M 15/263* (2006.01)
*D06M 15/643* (2006.01)  *D06M 15/693* (2006.01)

(86) International application number:
**PCT/JP2018/026310**

(87) International publication number:
**WO 2019/017273 (24.01.2019 Gazette 2019/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.07.2017  JP 2017139983**

(71) Applicant: **Teijin Frontier Co., Ltd.**
**Osaka-shi, Osaka 530-0005 (JP)**

(72) Inventor: **YOSHIDA Koji**
**Osaka-shi**
**Osaka 530-0005 (JP)**

(74) Representative: **Cockerton, Bruce Roger**
**Carpmaels & Ransford LLP**
**One Southampton Row**
**London WC1B 5HA (GB)**

(54) **WOVEN FABRIC FOR AIRBAGS**

(57) A task is to provide a woven fabric for airbags for protecting drivers and passengers of an automobile and the like, wherein the woven fabric for airbags has excellent flexibility, tear strength, and elongation at break, and means for solution is a woven fabric for airbags comprising a polyester multifilament, wherein the polyester multifilament has a total fineness in the range of 140 to 580 dtex, and has the number of filaments in the range of 96 to 192, wherein the difference between the total fineness of warp yarns constituting the woven fabric and the total fineness of weft yarns constituting the woven fabric is 5 dtex or less, and the number of warp yarns per unit length is smaller than the number of weft yarns per unit length.

EP 3 656 902 A1

**Description**

Technical Field

The present invention relates to a woven fabric for airbags for protecting drivers and passengers of an automobile and the like, wherein the woven fabric for airbags has excellent flexibility, tear strength, and elongation at break.

Background Art

Recently, woven fabric made of a synthetic fiber is widely used as woven fabric for airbags for protecting drivers and passengers of automobiles. Particularly, woven fabric formed from nylon yarns, polyester yarns, or the like is generally used in the form of a bag sewn from the fabric (for example, PTL's 1 to 4).
However, the woven fabric for airbags generally has a coating applied, and therefore has a problem in that the fabric has so poor flexibility that it is difficult to store the fabric. Further, a problem occurs in that when the fineness of yarns constituting the woven fabric is reduced in order to improve the flexibility of the fabric, the tear strength of the fabric is lowered.

Citation List

Patent Literature

PTL 1: JP-A-2004-204404
PTL 2: JP-A-2007-262592
PTL 3: JP-A-2012-41652
PTL 4: Japanese Patent No. 4756407

Summary of Invention

Technical Problem

In view of the above, the present invention has been made, and an object of the invention is to provide a woven fabric for airbags for protecting drivers and passengers of an automobile and the like, wherein the woven fabric for airbags has excellent flexibility, tear strength, and elongation at break.

Solution to Problem

The present inventor has conducted extensive and intensive studies with a view toward solving the above-mentioned problems. As a result, it has been found that a woven fabric for airbags having excellent flexibility, tear strength, and elongation at break can be obtained by improving the fineness of yarns constituting the woven fabric, the number of the yarns per unit length, and the like, and further extensive and intensive studies have been made, and thus the present invention has been completed.
Thus, in the present invention, there is provided "a woven fabric for airbags, the woven fabric comprising a polyester multifilament, the polyester multifilament having a total fineness in the range of 140 to 580 dtex, and having the number of filaments in the range of 96 to 192, wherein the difference between the total fineness of warp yarns constituting the woven fabric and the total fineness of weft yarns constituting the woven fabric is 5 dtex or less, and the number of warp yarns per unit length is smaller than the number of weft yarns per unit length".
In the woven fabric for airbags, it is preferred that the polyester multifilament has a tensile strength in the range of 6.5 to 8.0 cN/dtex. It is preferred that the woven fabric has a cover factor in the range of 1, 700 to 2,600. It is preferred that the weave of the woven fabric is plain weave . It is preferred that the woven fabric has been subjected to calendering. It is preferred that the woven fabric is uncoated. It is preferred that the woven fabric has a coating applied to at least one surface of the woven fabric, wherein the coating is obtained by coating the woven fabric with a resin comprising at least one member selected from the group consisting of silicone, urethane, acrylic, and rubber resins, and a copolymer thereof. It is preferred that the coating weight of the resin for the coating is in the range of 15 to 25 g/m$^2$. It is preferred that the woven fabric has a bending stiffness of 90 mm or less in both the warp and weft directions, as measured in accordance with JIS L1096-1990 6.19.1 A method. It is preferred that the woven fabric has a tear strength (average of the values in the warp and weft directions) in the range of 200 to 600N, as measured in accordance with ISO 13937-2 single tongue method. It is preferred that the woven fabric has an elongation at break (average of the values in the warp and weft directions) of 15% or more, as measured in accordance with JIS L1096-1990 6.12.1 A method by pulling the woven fabric at a pulling rate of 200 mm/min with a woven fabric width of 3 cm and a length of the specimen between grips of 15 cm.

Advantageous Effects of Invention

In the present invention, there can be obtained a woven fabric for airbags for protecting drivers and passengers of an automobile and the like, wherein the woven fabric for airbags has excellent flexibility, tear strength, and elongation at break.

Description of Embodiments

Hereinbelow, an embodiment of the present invention will be described in detail. First, the fiber constituting the woven fabric for airbags of the invention is a polyester multifilament. The polyester multifilament has large frictional force between fibers, and therefore is preferred as a fiber constituting the woven fabric for airbags.
It is necessary that the polyester multifilament have a total fineness in the range of 140 to 580 dtex (preferably 330 to 580 dtex). When the total fineness of the polyester multifilament is less than 140 dtex, it is likely that it becomes difficult to obtain a satisfactory strength of the woven fabric for airbags. On the other hand, when the total fineness of the polyester multifilament is more than 580 dtex, problems likely occur in that the fabric woven using such a multifilament has such a large thickness that it is difficult to store the fabric in an apparatus, and in that the woven fabric using the thick fiber is so rigid that an impact on a face or the like upon inflation is unlikely to be absorbed. The total fineness can be measured by JIS L1013-1992.
Further, it is important that the polyester multifilament has the number of filaments in the range of 96 to 192, and the number of filaments is more preferably 96 to 144 in view of the productivity. When the number of filaments is 95 or less, the resultant woven fabric is likely to be rigid. On the other hand, when the number of filaments is 193 or more, the single fiber fineness is small and hence the productivity of the fiber is likely to be poor, leading to an increase of the cost of the woven fabric.
Further, the polyester multifilament preferably has a tensile strength (fiber strength) of 6.5 cN/dtex or more. When the tensile strength of the polyester multifilament is less than 6.5 cN/dtex, it is likely that a satisfactory strength of the woven fabric for airbags cannot be obtained. The tensile strength of the polyester multifilament is especially preferably 7.0 cN/dtex or more. Further, in view of the construction of the fiber, it is difficult to achieve a tensile strength of more than 8.0 cN/dtex. Accordingly, a preferred range of the tensile strength is 6.5 to 8.0 cN/dtex.
Further, in the woven fabric for airbags of the invention, it is necessary that the difference between the total fineness of warp yarns constituting the woven fabric and the total fineness of weft yarns constituting the woven fabric be 5 dtex or less (more preferably 3 dtex or less, further preferably 1 dtex or less, especially preferably the total fineness of warp yarns and the total fineness of weft yarns are the same) . When the difference between the total fineness of the warp yarns and the total fineness of the weft yarns is more than 5 dtex, the balance between the flexibility and the cloth strength likely deteriorates.
Further, it is necessary that the number of warp yarns per unit length be smaller than the number of weft yarns per unit length. When the number of warp yarns per unit length is equal to or larger than the number of weft yarns per unit length, the flexibility of the fabric likely becomes poor. The reason for this is that when the number of warp yarns is increased while the number of weft yarns is constant, the stress applied to the weft yarns is increased, so that the curved structure of the warp yarns is reduced, causing the cloth to be poor in flexibility. In the woven fabric, the number of warp yarns per unit length is preferably in the range of 40 to 57/2.54 cm. Further, the number of weft yarns per unit length is preferably in the range of 45 to 60/2.54 cm. Furthermore, the difference between the number of weft yarns per unit length and the number of warp yarns per unit length is preferably in the range of 1 to 5/2.54 cm.
Further, the woven fabric preferably has a cover factor of 1,700 to 2,600, more preferably 1,800 to 2,400. When the cover factor of the woven fabric is less than 1,700, it is likely that a satisfactory strength of the woven fabric for airbags cannot be obtained, and that the slippage resistance becomes markedly poor and the opening of seams becomes large so that the airtightness of the airbag when being inflated is poor, and thus the fabric is not suitable for woven fabric for airbags . When the cover factor of the woven fabric is more than 2,600, it is likely that the degree of freedom of intersections of fibers is reduced, so that the flexibility and tear strength of the woven fabric become poor, making it difficult to obtain satisfactory performance of airbag woven fabric. The cover factor is determined from the following formula:

$$CF = (DWp/1.1)^{1/2} \times MWp + (DWf/1.1)^{1/2} \times MWf$$

wherein DWp is a total fineness (dtex) of warp yarns, MWp is the number of warp yarns per unit length (number of yarns/2.54 cm), DWf is a total fineness (dtex) of weft yarns, and MWf is the number of weft yarns per unit length (number of yarns/2.54 cm) .

With respect to the woven fabric, examples of weaves of the woven fabric include twill weave, satin weave, plain weave, and ripstop, but, in view of the productivity, plain weave is most preferred.

With respect to the weaving method for the woven fabric, weaving can be made by a customary method using a rapier loom, an air jet loom, a Sulzer loom, a water jet loom, or the like, but, from the viewpoint of the productivity, a water jet loom is preferred.

The woven fabric for airbags of the invention may be uncoated, or may have a resin coating applied to at least one surface of the woven fabric for reducing the air permeability.

The resin preferably comprises at least one member selected from the group consisting of silicone, urethane, acrylic, and rubber resins, and a copolymer thereof. Of these, a silicone resin is especially preferred.

Examples of silicone resins include a dimethylsilicone rubber, a methylvinylsilicone rubber, a methylphenylsilicone rubber, a trimethylsilicone rubber, a fluorosilicone rubber, a methylsilicone resin, a methylphenylsilicone resin, a methylvinylsilicone resin, an epoxy-modified silicone resin, an acryl-modified silicone resin, and a polyester-modified silicone resin.

When a silicone resin is used, for example, as described in Japanese Patent No. 4756407, a reactive curing agent, a bonding auxiliary, or the like may be used.

The resin preferably has a viscosity of 10,000 to 50,000 cs at 25°C, and, when the resin has a viscosity in this range, coating can be easily made, and penetration of the resin into the woven fabric is unlikely to occur and further strong bonding force of the resin with the woven fabric can be achieved.

When a coating is applied to the surface of the woven fabric, the coating weight of the resin is preferably in the range of 15 to 25 $g/m^2$ (15 to 25 $cN/m^2$) , further preferably 16 to 22 $g/m^2$. When the coating weight of the resin for the coating is less than 15 $g/m^2$, it is likely that the resultant woven fabric has unsatisfactory airtightness and thus is not suitable for woven fabric for airbags. On the other hand, when the coating weight is more than 25 $g/m^2$, the weight of the woven fabric is likely to be unnecessarily heavy.

Further, before or after (preferably before) coating the woven fabric with a resin, the woven fabric may be subjected to calendering using a heated roller. In this case, not only can the air permeability of the woven fabric be reduced, but also the surface of the woven fabric is improved in smoothness, making it possible to reduce the coating weight of the resin.

As a method for coating the woven fabric with a resin, for example, by a kiss-roll coating method, a comma coating method, or a knife coating method, coating can be easily performed continuously at the intended coating weight.

After completion of coating the woven fabric with a resin, for subjecting the resin to heating treatment, a heat treatment using a non-contact dryer is preferably conducted. The dryer is generally partitioned into a zone at about 130°C and a zone at about 160°C, and efficiently subjects the resin to heating treatment, so that a woven fabric for airbags having strong bonding force of the resin with the woven fabric can be obtained.

When the woven fabric is uncoated, the woven fabric may be subjected to calendering using a heated roller. In this case, advantages are obtained not only in that the air permeability of the woven fabric can be reduced, but also in that the surface of the woven fabric is improved in smoothness.

With respect to the thus obtained woven fabric for airbags, the woven fabric preferably has an elongation at break (average of the values in the warp and weft directions) of 15% or more, more preferably 20% or more (especially preferably 25 to 40%) . When the elongation at break of the woven fabric is less than 15%, there is a danger that the woven fabric breaks when the airbag is inflated. The elongation at break (average of the values in the warp and weft directions) is an elongation at break (average of the values in the warp and weft directions), as measured in accordance with JIS L1096-1990 6.12.1 A method by pulling the woven fabric at a pulling rate of 200 mm/min with a woven fabric width of 3 cm and a length of the specimen between grips of 15 cm.

Further, with respect to the woven fabric for airbags, the woven fabric preferably has a bending stiffness of 90 mm or less in both the warp yarn direction and the weft yarn direction, further preferably a bending stiffness in the warp direction of 70 mm or less (especially preferably 50 to 70 mm), as measured in accordance with JIS L1096-1990 6.19.1 A method. When the bending stiffness of the woven fabric is more than 90 mm, it is likely that it becomes difficult to store the airbag.

Further, the woven fabric for airbags preferably has a tear strength (average of the values in the warp and weft directions) of 200 to 600 N, as measured in accordance with ISO 13937-2 single tongue method. When the tear strength of the woven fabric is less than 200 N, there is a danger that the woven fabric breaks when the airbag is inflated. When the tear strength of the woven fabric is more than 600 N, there is a need to increase the total fineness of the polyester multifilament, and the resultant woven fabric is likely to be rigid and have an increased thickness.

Further, the woven fabric for airbags preferably has a fiber areal weight in the range of 200 to 300 g/m$^2$. When the fiber areal weight of the woven fabric is smaller than the above range, the woven fabric is likely to be lowered in tear strength. On the other hand, when the fiber areal weight of the woven fabric is larger than the above range, the woven fabric is likely to have poor flexibility.

Further, the woven fabric for airbags preferably has a thickness in the range of 0.2 to 0.4 mm. When the thickness of the woven fabric is smaller than the above range, the woven fabric is likely to be lowered in tear strength. On the other hand, when the thickness of the woven fabric is larger than the above range, the woven fabric is likely to have poor flexibility.

The woven fabric for airbags of the invention has excellent flexibility, tear strength, and elongation at break, and therefore can be used in a driver's seat airbag, a front passenger seat airbag, a rear seat airbag, a side airbag, a curtain airbag, a knee airbag, and the like. Further, the woven fabric for airbags of the invention can also be applied to portions to which the woven fabric is functionally applicable, such as a head bag for protection from rear-end collision, a mini bag for child protection, a bag for leg protection, a bag for seat belt, and the like.

Examples

Hereinbelow, the present invention will be described in more detail with reference to the following Examples, which should not be construed as limiting the scope of the invention. The measurement was conducted in accordance with the methods described below.

1) Tensile strength and total fineness of a polyester multifilament

The measurement was conducted by the method described in JIS L1013-1992.

2) Cover factor

A cover factor CF was determined from the following formula:

$$CF = (DWp/1.1)^{1/2} \times MWp + (DWf/1.1)^{1/2} \times MWf$$

wherein DWp is a total fineness (dtex) of warp yarns, MWp is the number of warp yarns per unit length (number of yarns/2.54 cm), DWf is a total fineness (dtex) of weft yarns, and MWf is the number of weft yarns per unit length (number of yarns/2.54 cm) .

3) Elongation at break

In accordance with JIS L1096-1990 6.12.1 A method, with respect to the warp direction and weft direction of a woven fabric, elongations at break were individually measured by pulling the woven fabric at a pulling rate of 200 mm/min with a woven fabric width of 3 cm and a length of the specimen between grips of 15 cm, and an average of the measured values was determined.

4) Bending stiffness

A bending stiffness was measured in accordance with JIS L1096-1990 6.19.1 A method.

5) Tear strength

With respect to the warp direction and weft direction of a woven fabric, tear strengths were individually measured in accordance with ISO 13937-2 single tongue method, and an average of the measured values was determined.

6) Fiber areal weight

A fiber areal weight was measured in accordance with JIS L1096-1990 6.4.2.

7) Thickness

A thickness was measured in accordance with JIS L1096-1990 6.5.

[Examples 1 to 4]

Using each of the polyester multifilaments shown in Table 1, which are in an untwisted state, a fabric with plain weave was woven by means of a water jet loom so that the resultant fabric had a cover factor shown in Table 1 to obtain a gray fabric. The obtained gray fabric was subjected to coating with an emulsion silicone resin (manufactured by Shin-Etsu Chemical Co., Ltd.) by a floating knife method while contacting a blade with the back surface of the woven fabric so that the solid resin weight became one shown in Table 1.

These woven fabrics for airbags had excellent flexibility, and had reduced opening of seams when the airbag was inflated, and thus exhibited excellent airtightness and were advantageously used particularly as a side airbag in a curtain form.

[Example 5]

Using the polyester multifilament shown in Table 1, which is in an untwisted state, a fabric with plain weave was woven by means of a water jet loom so that the resultant fabric had a cover factor shown in Table 1 to obtain a gray fabric. Then, the surface of the gray fabric with plain weave, which is to be subjected to coating, was pressed (calendered) by means of a heated roll at 150°C, and then the resultant gray fabric was subjected to coating with an emulsion silicone resin (manufactured by Shin-Etsu Chemical Co., Ltd.) by a floating knife method while contacting a blade with the back surface of the woven fabric so that the solid resin weight became one shown in Table 1.

The obtained woven fabric for airbags had excellent flexibility, and had reduced opening of seams when the airbag was inflated, and thus exhibited excellent airtightness and was advantageously used particularly as a side airbag in a curtain form.

[Comparative Examples 1 to 5]

Using each of the polyester multifilaments shown in Table 1, which are in an untwisted state, a fabric with plain weave was woven by means of a water jet loom so that the resultant fabric had a cover factor shown in Table 1 to obtain a gray fabric. The obtained gray fabric was subjected to coating with an emulsion silicone resin (manufactured by Shin-Etsu Chemical Co., Ltd.) by a floating knife method while contacting a blade with the back surface of the woven fabric so that the solid resin weight became one shown in Table 1. These woven fabrics for airbags were not satisfactory in respect of the flexibility.

[Example 6]

As warp yarns and weft yarns, using a polyester multifilament having untwisted 566 dtex/140 filaments (single fiber fineness: 4.0 dtex), a tensile strength of 7.6 g/dtex, and a boiling water shrinkage rate of 1.9%, a fabric with plain weave was woven by means of a water jet loom, and then passed through a hot water tank (a preliminary layer, a first layer, and a second layer), and subsequently subjected to dry setting finish using a suction drum dryer to obtain an uncoated woven fabric for airbags. The results of the evaluation of physical properties of the obtained uncoated woven fabric for airbags are shown in Table 1.

The obtained woven fabric for airbags had excellent flexibility, and had reduced opening of seams when the airbag was inflated, and thus exhibited excellent airtightness and was advantageously used particularly as a side airbag in a curtain form.

[Table 1]

| | Example 1 | Example 2 | Example 3 | Example 4 | Example 5 | Example 6 | Comparative Example 1 | Comparative Example 2 | Comparative Example 3 | Comparative Example 4 | Comparative Example 5 |
|---|---|---|---|---|---|---|---|---|---|---|---|
| Calendered or not | No | No | No | No | Yes | No | No | No | No | No | No |
| Tensile strength of yarn (cN/dtex) | 7.9 | 7.1 | 6.7 | 6.8 | 7.3 | 7.8 | 7.9 | 6.7 | 6.3 | 7.1 | 6.8 |
| Total fineness of yarn (dtex) | 566 | 500 | 420 | 330 | 500 | 566 | 566 | 240 | 600 | 300 | 350 |
| Number of filaments | 140 | 144 | 192 | 96 | 144 | 140 | 140 | 96 | 196 | 96 | 48 |
| Number of yarns per unit length (Warp yarns/weft yarns) Number of yarns/2.54 cm | 51/52 | 45/47 | 52/53 | 52/53 | 44/45 | 50/52 | 52/51 | 68/67 | 46/45 | 70/69 | 65/64 |
| Cover factor | 2336 | 1961 | 2052 | 1812 | 1897 | 2336 | 2336 | 1994 | 2125 | 2296 | 2301 |
| Silicone coating weight (g/m2) | 22 | 20 | 20 | 25 | 15 | 0 | 21 | 20 | 20 | 15 | 30 |
| Thickness (mm) | 0.31 | 0.35 | 0.28 | 0.24 | 0.25 | 0.32 | 0.31 | 0.22 | 0.40 | 0.22 | 0.24 |
| Fiber areal weight (g/m$^2$) | 264 | 220 | 223 | 215 | 210 | 242 | 266 | 190 | 260 | 205 | 215 |
| Bending stiffness (Warp/weft) (mm) | 66/86 | 70/83 | 65/79 | 60/70 | 62/68 | 50/48 | 70/94 | 72/90 | 73/91 | 76/94 | 72/96 |
| Tensile strength (N/5 cm) | 3654 | 3300 | 3150 | 3045 | 3220 | 3892 | 3851 | 2450 | 3000 | 2890 | 3000 |

EP 3 656 902 A1

(continued)

|  | Example 1 | Example 2 | Example 3 | Example 4 | Example 5 | Example 6 | Comparative Example 1 | Comparative Example 2 | Comparative Example 3 | Comparative Example 4 | Comparative Example 5 |
|---|---|---|---|---|---|---|---|---|---|---|---|
| Tensile elongation (%) | 33 | 35 | 35 | 33 | 31 | 34 | 33 | 37 | 38 | 36 | 33 |
| Tear strength (N) | 251 | 350 | 350 | 270 | 300 | 157 | 260 | 210 | 270 | 220 | 200 |
| Air permeability (cc/cm²/sec) | 0 | 0 | 0 | 0 | 0 | 0.11 | 0 | 0 | 0 | 0 | 0 |

Industrial Applicability

In the present invention, there is provided a woven fabric for airbags for protecting drivers and passengers of an automobile and the like, wherein the woven fabric for airbags has excellent flexibility, tear strength, and elongation at break, and the invention is of extremely great industrial significance.

**Claims**

1. A woven fabric for airbags, the woven fabric comprising a polyester multifilament,
   the polyester multifilament having a total fineness in the range of 140 to 580 dtex, and having the number of filaments in the range of 96 to 192,
   wherein the difference between the total fineness of warp yarns constituting the woven fabric and the total fineness of weft yarns constituting the woven fabric is 5 dtex or less, and the number of warp yarns per unit length is smaller than the number of weft yarns per unit length.

2. The woven fabric for airbags according to claim 1, wherein the polyester multifilament has a tensile strength in the range of 6.5 to 8.0 cN/dtex.

3. The woven fabric for airbags according to claim 1 or 2, which has a cover factor in the range of 1,700 to 2,600.

4. The woven fabric for airbags according to any one of claims 1 to 3, wherein the weave of the woven fabric is plain weave.

5. The woven fabric for airbags according to any one of claims 1 to 4, which has been subjected to calendering.

6. The woven fabric for airbags according to any one of claims 1 to 5, which is uncoated.

7. The woven fabric for airbags according to any one of claims 1 to 5, which has a coating applied to at least one surface of the woven fabric, wherein the coating is obtained by coating the woven fabric with a resin comprising at least one member selected from the group consisting of silicone, urethane, acrylic, and rubber resins, and a copolymer thereof.

8. The woven fabric for airbags according to claim 7, wherein the coating weight of the resin for the coating is in the range of 15 to 25 g/m$^2$.

9. The woven fabric for airbags according to any one of claims 1 to 8, which has a bending stiffness of 90 mm or less in both the warp and weft directions, as measured in accordance with JIS L1096-1990 6.19.1 A method.

10. The woven fabric for airbags according to any one of claims 1 to 9, which has a tear strength (average of the values in the warp and weft directions) in the range of 200 to 600 N, as measured in accordance with ISO 13937-2 single tongue method.

11. The woven fabric for airbags according to any one of claims 1 to 10, which has an elongation at break (average of the values in the warp and weft directions) of 15% or more, as measured in accordance with JIS L1096-1990 6.12.1 A method by pulling the woven fabric at a pulling rate of 200 mm/min with a woven fabric width of 3 cm and a length of the specimen between grips of 15 cm.

## INTERNATIONAL SEARCH REPORT

| International application No. |
| --- |
| PCT/JP2018/026310 |

**A. CLASSIFICATION OF SUBJECT MATTER**
Int.Cl. D03D1/02(2006.01)i, D06M15/263(2006.01)i, D06M15/643(2006.01)i, D06M15/693(2006.01)i

According to International Patent Classification (IPC) or to both national classification and IPC

**B. FIELDS SEARCHED**

Minimum documentation searched (classification system followed by classification symbols)
Int.Cl. D03D1/02, D06M15/263, D06M15/643, D06M15/693

Documentation searched other than minimum documentation to the extent that such documents are included in the fields searched
Published examined utility model applications of Japan      1922–1996
Published unexamined utility model applications of Japan      1971–2018
Registered utility model specifications of Japan      1996–2018
Published registered utility model applications of Japan      1994–2018

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>A | CN 103726168 A (TORAY FIBERS & TEXTILES RES LAB CHINA CO., LTD.) 16 April 2014, claims 1, 2, example 2<br>(Family: none) | 1–6, 9–11<br>7–8 |
| A | JP 2008-25089 A (TORAY INDUSTRIES, INC.) 07 February 2008, claim 1<br>& US 2010/0048079 A1, claim 1 & WO 2007/148791 A1 & EP 2042628 A1 & CA 2655825 A & KR 10-2009-0026347 A & CN 101479414 A & TW 200809025 A & KR 10-1372186 B | 1–11 |

☒ Further documents are listed in the continuation of Box C.          ☐ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 07.09.2018 | 18.09.2018 |

| Name and mailing address of the ISA/<br>Japan Patent Office<br>3-4-3, Kasumigaseki, Chiyoda-ku,<br>Tokyo 100-8915, Japan | Authorized officer |
| --- | --- |
| | Telephone No. |

Form PCT/ISA/210 (second sheet) (January 2015)

**INTERNATIONAL SEARCH REPORT**

International application No.

PCT/JP2018/026310

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2008-248396 A (TORAY INDUSTRIES, INC.) 16 October 2008, claim 1 (Family: none) | 1-11 |
| A | JP 2014-181430 A (ASAHI KASEI FIBERS CORPORATION) 29 September 2014, example 9 & CN 104060366 A | 1-11 |
| A | JP 2007-182646 A (TORAY INDUSTRIES, INC.) 19 July 2007, example 7 (Family: none) | 1-11 |
| A | JP 2013-40415 A (ASAHI KASEI FIBERS CORPORATION) 28 February 2013, example 7 (Family: none) | 1-11 |
| A | JP 2007-224486 A (TORAY INDUSTRIES, INC.) 06 September 2007, claim 1 (Family: none) | 1-11 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004204404 A
- JP 2007262592 A
- JP 2012041652 A
- JP 4756407 B